# EUROPEAN PATENT SPECIFICATION

(11) **EP 3 073 224 B1**
(45) Date of publication and mention of the grant of the patent: **08.05.2019**
(21) Application number: 15161291.8
(22) Date of filing: 27.03.2015
(51) Int. Cl.: G01C 21/16, G01C 21/32

(54) **SENSOR DATA FUSION BASED ON DIGITAL MAP INFORMATION**
SENSORDATENFUSION BASIEREND AUF DIGITALEN KARTENDATEN
FUSION DE DONNÉES DE CAPTEUR SUR LA BASE DES INFORMATIONS DE CARTE NUMÉRIQUE

(43) Date of publication of application: 28.09.2016
(73) Proprietor: Panasonic Automotive & Industrial Systems Europe GmbH, 63225 Langen (DE)
(72) Inventor: Skudlarek, Stefan Jan, 63225 Langen (DE); Hage, Marwan, 63225 Langen (DE); Kota, Rajesh Kumar, 63225 Langen (DE)
(74) Representative: Grünecker Patent- und Rechtsanwälte PartG mbB

(56) References cited:
- EP-A1- 2 610 782
- US-A1- 2013 245 941
- JANSSEN H ET AL: "Vehicle surround sensing based on information fusion of monocular video and digital map", INTELLIGENT VEHICLES SYMPOSIUM, 2004 IEEE PARMA, ITALY JUNE 14-17, 2004, PISCATAWAY, NJ, USA,IEEE, 14 June 2004 (2004-06-14), pages 244-249, XP010727476, DOI: 10.1109/IVS.2004.1336389 ISBN: 978-0-7803-8310-4

## Description

### FIELD OF THE INVENTION

The present invention generally relates to vehicle navigation systems and driver assistance systems. More specifically, the present invention relates to the provision of position data for vehicular navigation and driver assistance by means of fusion of data received from plural sources, including sensor data and digital map data.

### BACKGROUND ART

Automotive navigation requires reliable positioning, especially in areas with dense road networks and disturbed sensor reception.

A recent development in the field of vehicle navigation and safety is the introduction of Advanced Driver Assistance Systems (ADAS). Advanced driver assistance systems use a variety of sensor mechanisms a vehicle is equipped with, to determine the current state of the vehicle and the current state of the roadway in front of the vehicle. Such sensors may include radar and vision-oriented sensors, such as cameras, as well as measurement devices for speed and acceleration, or GPS receivers.

Since all of these sensor devices have certain limitations, advanced driver assistance systems may use digital map data as an additional component. One way of incorporating digital map data into position determination of a vehicle navigation and driver assistance systems is the concept of an "electronic horizon". Said concept is described in European patent application publication EP 2 042 833 A1.

An electronic horizon is an electronic map of an area surrounding a vehicle, but it contains only information that may be relevant for an advanced driver assistance/navigation system. For instance, as described in EP 2 042 833 A1, an electronic horizon may be provided in the form of a mathematical graph indicating possible paths of movement ahead of the vehicle, overlaid on a map of the road network. In addition, the electronic horizon may include additional information, such as information about speed limits, road curvature or lane information.

Electronic horizons are generated by a horizon generator storing, as a basis, full electronic map data of the region that the vehicle moves in. For generating an electronic horizon, the horizon generator further employs position data of the vehicle, which may be obtained from a positioning module included in the vehicle, based on at least GPS data, for instance. In particular, the positioning module may determine the position on the basis of a data fusion of data received from different sources.

The electronic horizon is provided via a communication bus in the vehicle to one or more ADAS applications. Generally speaking, the electronic horizon is a broadcast stream including simplified map data encoding the most likely paths ahead of the vehicle.

US patent application 2010/0241354 describes the evaluation of map data material using sensor data. Validated map data can be used for driver assistance by generating an electronic horizon. International patent application WO 2011/160731 A1 describes the comparison of a local electronic map with a source map, in order to determine any errors in the local map. A fusion of road map geometry information from different sources, including radar and electronic horizon information, for instance, is described in US-patent 8,712,691 B2. Before the fusion, source data are compared with each other. In case of deviations of possible paths generated, the source data may be modified or adapted prior to the fusion.

Summarizing, contemporary advanced driver assistance systems rely upon both sensor data as well as electronic map data (in particular: electronic horizon data) which are generated and updated iteratively. Positioning thus means weighing the information of the digitized map data of the road network (which may contain flaws and outdated parts) and the vehicle sensor information (which may be flawed by environmental effects, such as multipath of GPS) against each other.

Document EP 2 610 782 A1 describes a method for planning the route of a vehicle based on electronic horizon data, which further includes vehicle data.

Document US 2013/0245941 A1 describes a navigation/driver assistance system for a vehicle, and a fusion of electronic horizon data and sensor data is performed.

The article "Vehicle Surround Sensing Based on Information Fusion of Monocular Video and Digital Map", by H. Janssen et al., 2004 IEEE Intelligent Vehicles Symposium, University of Parma, June 14-17. 2004, pages 244-249) describes driver assistance systems, wherein a multi-sensor data fusion is performed. Navigation is further based on a digital map.

It is a drawback of certain contemporary automotive navigation systems that the horizon generator (digital map matching & display application) and the positioning module (sensor data processing & positioning module) are physically separated, and there may be only a limited interface therebetween.

There are different reasons for said physical separation of horizon generator and positioning module. Generally, the sensor data processing and positioning module forms a part of the main head unit of the vehicle.

On the other hand, the navigation map application (horizon generator) may be run on a cloud server, i.e. outside the actual vehicle, and thus the possible size/amount of the data transmitted between the positioning module (vehicle) and the horizon generator (cloud server) is limited.

In a second example, the navigation map application runs on a mobile device in the vehicle which may be connected to the head unit of the vehicle, for instance by a cable. However, as a rule, the sensor data processing/positioning software (as well as the surrounding head unit system software) and the navigation map application are delivered by different suppliers. The supplier of the head unit and positioning module (in the following: "Supplier A") has no insight regarding the precision of map data and the quality of the map matching performed by means of the navigation application provided by a different supplier (in the following: "Supplier B"). Moreover, it is a general requirement that a customer should be enabled to change from a current Supplier B of the navigation map application to a different one, without any change to the head unit and thus to the positioning module of Supplier A. Consequently, the interface between the positioning module and the map matching application should be rather simple and thus limited, in the above second example as well, for reasons of maintaining supplier compatibility (business-related reasons).

Because of the limited interface, the positioning module has to put a lower weight on the map matched position information, since almost always no information on alternative positions/density of the surrounding road network/map precision/error likelihood is available. This leads to a much stronger impact of sensor data errors, such as GPS multipath error, compared to systems with unified positioning and map matching.

### SUMMARY OF THE INVENTION

The present invention aims to provide an improved method of determining vehicle position data based on a fusion of sensor data, wherein the method avoids any severe impact of sensor data errors a corresponding improved vehicle positioning module and navigation system.

This is achieved by the features of the independent claims.

It is the particular approach of the present invention to compare several mutually independent position paths calculated from different sensor data sources against electronic horizon data, and to select those sensor data paths for data fusion that are judged to be reliable taking into account the information received from the electronic horizon. A data fusion is performed based on the selected sensor data while other potentially unreliable sensor data are ignored for the data fusion. The present invention is particularly suitable in case of a limited availability of electronic map data to the positioning module, in view of a limited interface between the positioning module and the electronic horizon generator,

Preferably, the data fusion is performed further based on the electronic horizon data.

Preferably, the comparing step compares each of the sensor data paths with the possible paths indicated by the electronic horizon data, the judging step judges, for each of the sensor data paths, whether the respective path diverges from a possible path indicated by the electronic horizon data, and the selecting step selects sensor data paths not diverging from a possible path indicated by the electronic horizon data and ignores the sensor data paths diverging from the possible paths indicated by the electronic horizon data, if there is no majority of sensor data paths diverging from all possible paths indicated by the electronic horizon data.

Also preferably, in the step of generating a fused position, the electronic horizon data are ignored and sensor data paths that are relatively close to each other are considered to be reliable and selected for the data fusion, if there is a majority of sensor data paths diverging from all possible paths indicated by the electronic horizon data. As indicated above, a majority of sensor paths diverging from the path network of the electronic horizon is interpreted as a regular off-road or a map data error, so that ignoring or at least minimizing the usage of the electronic horizon data by the positioning is indicated.

Hence, in preferred embodiments, sensor paths diverging from the possible paths of the electronic horizon are ignored (are not judged to be reliable since a sensor data error is assumed), as long as there is no majority of the sensor data paths diverging from all possible paths of the electronic horizon. In the opposite case, an error of the electronic horizon such as an error due to erroneous map data, or a regular off-road position is assumed. Thus, the present invention also allows a judgment regarding reliability of digital map data on which an electronic horizon is based to be taken into account for weighting a plurality of data for data fusion.

The selection of sensor data paths that are relatively close to each other means the selection of those paths between which the distances remain below a predefined threshold, or between which the distances are considerably smaller than the distances between each of those paths to be selected and any other possible path indicated by sensor data or the electronic horizon. A skilled person is aware of a plurality of possible measures for indicating a distance between paths, such as an average distance between corresponding points (in time or along a predetermined axis such as a current motion vector of the vehicle), or a maximum distance. On the other hand, two paths are considered to diverge from each other, for instance, if the respective distance is larger than a predefined threshold, or, for instance, if a distance between corresponding points becomes larger with an increasing distance of the respective points from a current position of the vehicle. A skilled person is aware of various further reasonable measures for closeness and divergence of vehicle paths.

According to a preferred embodiment, the electronic horizon data further include environment attribute information indicating environment attributes of the possible paths of movement ahead. Such environment attributes are, for instance, the presence of tunnels, the number of lanes on the road or prescribed speed limits. Further preferably, the comparing step comprises the step of analyzing the sensor data on the basis of the environment attribute information and the judging step judges whether particular sensor data are likely to be erroneous (are not reliable) on the basis of the analysis. Such sensor data that are judged to be likely to be erroneous are not selected but ignored in the data fusion. In particular, such sensor data may be ignored even if the corresponding sensor data paths do not diverge from the paths of the electronic horizon. For instance, in a tunnel or close to one, GPS data are likely to be erroneous and thus not reliable.

Preferably, the plurality of sensors includes sensors of different types. By using sensors of different types, based on different physical principles, it is unlikely that all sensors deliver incorrect or erroneous data at the same time, whereby robustness and reliability of the position determination can be enhanced. Possible types of sensors include but are not limited to odometers, gyro sensors, GPS receivers and cameras.

According to a preferred embodiment, the data fusion step also generates, besides position data, fused data about speed and/or the movement direction (heading) of the vehicle. Thus, the method generates not only current position data but also current speed and/or movement direction data.

Preferably, the generated fused data are transmitted to a map matching and electronic horizon generation module, for being further processed in order to perform a matching with more detailed digital map data and to update the electronic horizon, by at least providing map matched position data. The map matching and electronic horizon generation module may, in particular, be physically separated from the positioning module, and may, for instance, be located in a separate unit in the vehicle, connected to the positioning module via a wireless interface or an interface using a cable. Alternatively, the map matching and electronic horizon generation module may be located remotely from the vehicle, such as in a cloud.

More preferably, the positioning module further receives updated electronic horizon data from the map matching and electronic horizon generating module, in response to the transmission, and repeatedly performs the steps for generating current position data on the basis of the received updated electronic horizon data, in order to generate at least updated position data of the vehicle. This means an iterative procedure, wherein, in each iteration, position data are generated based on current sensor data, and said position data are map-matched to generate improved electronic horizon data, which are then input into the generation of position data in the next iteration.

In accordance with a particular aspect of the present invention, a vehicle navigation system is provided. The vehicle navigation system comprises a positioning module according to the second aspect of the present invention, further comprising a transmitter for transmitting the generated fused data to a map matching the electronic horizon generation module. The vehicle navigation system further comprises a map matching and electronic horizon generating module for generating updated electronic horizon data based on the fused data about at least the vehicle position transmitted by said positioning module and digital map data stored in the map matching and electronic horizon generating module and transmitting the updated electronic horizon data to the positioning module for being used as said electronic horizon data to generate at least an updated vehicle position.

According to a preferred embodiment of the present invention, a method of generating current position data of a vehicle, performed by a processor of the vehicle, is provided. The method comprises the steps of receiving electronic horizon data indicating possible paths of movement ahead of said vehicle on a road network and of receiving sensor data obtained by a plurality of sensors, the sensor data obtained by one of the sensors indicating a sensor data path which is a path of movement ahead for the vehicle. The method further comprises the step of generating a fused position of said vehicle as said current position, based on the received sensor data and the received electronic horizon data. The step of generating a fused position includes the steps of comparing each of the sensor data paths with possible paths indicated by the electronic horizon data and of judging, for each of the sensor data paths, whether the respective path diverges from a possible path indicated by the electronic horizon data. Further, the step of generating a fused position includes the step of selecting sensor data paths not diverging from a possible path indicated by the electronic horizon data and ignoring the sensor data paths diverging from the possible paths indicated by the electronic horizon data, if there is no majority of sensor data paths diverging from all possible paths indicated by the electronic horizon data, and the step of performing a data fusion based on the sensor data indicating the selected sensor data paths.

According to another preferred embodiment of the present invention, a positioning module for a vehicle, for generating current position data of the vehicle, is provided. The positioning module comprises a first receiver for receiving electronic horizon data indicating possible paths of movement ahead of the vehicle on a road network and a second receiver for receiving sensor data obtained by a plurality of sensors, the sensor data obtained by one of the sensors indicating sensor data path which is a path of movement ahead for the vehicle. The positioning module further comprises a fused data generator for generating a fused position of the vehicle as said current position, based on the received sensor data and the received electronic horizon data. The fused data generator includes a comparator for comparing each of the sensor data paths with the possible paths indicated by the electronic horizon data and a judging means for judging, for each of the sensor data paths, whether the respective path diverges from a possible path indicated by the electronic horizon data. The fused data generator further includes a selector for selecting sensor data paths not diverging from a possible path indicated by the electronic horizon data and ignoring the sensor data paths diverging from the possible paths indicated by the electronic horizon data, if there is no majority of sensor data paths diverging from all possible paths indicated by the electronic horizon data and a fusion performer for performing a data fusion based on the sensor data indicating the selected sensor data paths.

Further features and advantages of the present invention are set forth in dependent claims.

### BRIEF DESCRIPTION OF THE DRAWINGS

Additional features and advantages of the present invention will become apparent in the following and more particular description as illustrated in the accompanying drawings, wherein:
Fig. 1 illustrates an overview of an exemplary vehicle navigation system according to an embodiment of the present invention;
Fig. 2 is a flowchart illustrating an exemplary method according to an embodiment of the present invention;
Fig. 3 is a flowchart of method steps according to an embodiment of the present invention including data transmission between a positioning module and a map matching and electronic horizon generating module; and
Fig. 4 illustrates the processing of a positioning module in accordance with the present invention, in an exemplary situation of erroneous GPS data in a half-open tunnel.

### DETAILED DESCRIPTION

The present invention provides a method for vehicle positioning and a respective positioning module for a vehicle, which is particularly suitable in a situation, wherein communication between the positioning module and another module having a digital map database is limited.

Positioning means weighing the information of the digitized map data of the road network (which may contain flaws and outdated parts) and the car sensor information (which may be flawed by environmental effects such as multipath of GPS) against each other. The present invention therefore evaluates multiple independent position paths calculated from sensor data using an electronic horizon. The electronic horizon may be based on simplified map data encoding the most likely paths ahead of the vehicle and may be included, for instance, in a broadcast stream.

In particular, the weighing according to the present invention properly reflects both the probability of particular sensor data paths being erroneous, and of map data being erroneous.

For this purpose, it is a basic concept of the present invention that the positioning module uses the map information of an electronic horizon which is, in embodiments, generated as a low rate data stream by a map matching and display application to compare several mutually independent position paths calculated from different sensor data sources against the map information of the electronic horizon. In particular, the reliability of sensor data is evaluated prior to performing a sensor fusion. For instance, it may be evaluated whether some of the sensor data paths diverge from the possible paths indicated by the electronic horizon. If this is the case, it is assumed that the sensor data corresponding to the diverging sensor data path are not reliable and the respective path is ignored for positioning, as long as there is still a majority of sensor data paths that match a path indicated by the electronic horizon. If, on the other hand, a majority of the sensor data paths does not match the electronic horizon, this is considered to indicate a map data error, as long as the vehicle is not indeed being driven off-road, such as being driven in a car park.

The data from the electronic horizon used for comparison can be divided into two groups. The first group represents geometrical information on the network of the most likely paths ahead of the vehicle. The second group is formed by environmental attributes of the current location and the most likely paths ahead such as tunnels, the number of lanes, speed limits etc.

In an embodiment of the invention, the judgment on a sensor data path is made according to the following two aspects. Firstly, it is judged whether the sensor data path diverges from the geometrical path network of the electronic horizon, while the majority of sensor data paths remain close to the possible paths ahead. Further, in a second step, it may be checked whether there is an environmental attribute which makes the sensor input of the path prone to errors at this particular location. For instance, in the event of a road having a large uphill or downhill gradient, no precise measurement may be expected from two-dimensional gyro sensors. In that case, GPS are likely to provide better results. On the other hand, GPS can deviate in or in the vicinity of a tunnel.

A positioning module using the electronic horizon rather than only simple map matched position information has the further advantage that the positioning module has knowledge of the road network after the point of divergence of the sensor data. Even when the determined position is off-road, the positioning module can still process the possible paths on the road network received prior to the off-road position. For this purpose, a positioning module according the present invention stores the electronic horizon at the moment of going off-road. Thereby, a current position can be quickly recovered after the vehicle has returned to the road.

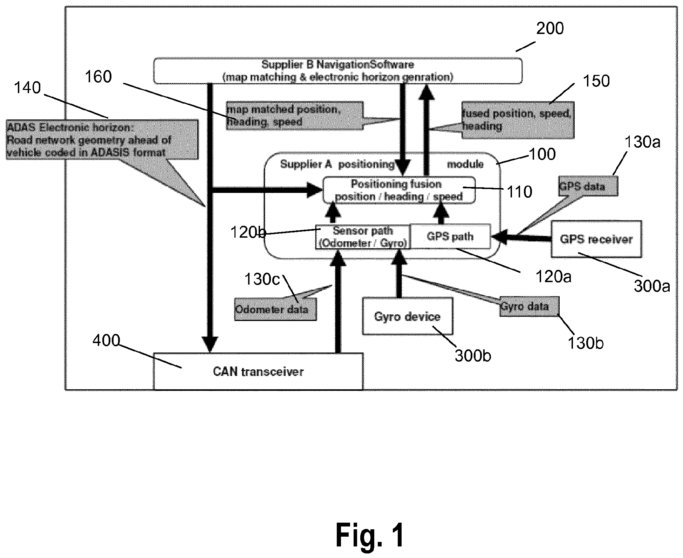

Fig. 1 is a general system overview of a navigation system in which the present invention can be embodied.

The positioning module 100 is shown in a central position of the drawing. The positioning module comprises a fusion generator 110. Further, the system comprises a map matching and electronic horizon generation module 200, which is, in the illustrated embodiment, represented by navigation software. In the illustrated case, positioning module and navigation software are provided by different suppliers indicated as "Supplier A" and "Supplier B" in the drawing, in accordance with a particular business arrangement that has been explained above. However, the present invention is not limited to such an arrangement but can also be applied if the positioning module and the map matching and electronic horizon generation module are provided by the same supplier.

Positioning module 100 receives sensor data (130a, 130b, 130c) obtained by a plurality of sensors (300a, 300b) that the vehicle is equipped with. In the present case, GPS data 130a, gyro data 130b indicating a linear or angular acceleration and odometer data 130c indicating velocity information are illustrated. Respectively, a GPS receiver 300a and a gyro device 300b are illustrated, while an odometer which is obviously also present has been omitted to make the drawing easy to understand. In the illustrated embodiment, the odometer data 120c are provided from the CAN bus via CAN transceiver 400 However, possible sensors are not limited to those shown in the drawing. For instance, camera-based sensors (2D and 3D-cameras) or other visual sensors and distance sensors are possible. However, the invention is also not limited to the above examples, and any sensor suitable for providing information that may be helpful for assisting in position determination and navigation that is available or will become available in the future can be used.

In the positioning module 100, the received sensor data are evaluated to calculate these sensor data paths (120a, 120b) which are most likely paths of movement of the vehicle, determined on the basis of the respective sensor data. In the present case, a GPS position path 120a and a combined odometer/gyro sensor path 120b are illustrated. In an embodiment, the combined gyro and odometer path is generated using the previous position and heading that are known with high confidence as start point. However, the number and kind of sensor data paths in accordance with the present invention are again not limited to said examples. Further, the sensor paths 120 are forwarded to fusion generator 110, which selects particular ones of the received sensor data paths for being included in a data fusion to be performed for obtaining a fused position.

The positioning module 100 and, more specifically, fusion generator 110, further receive electronic horizon data 140. The electronic horizon data 140 are generated by map matching and electronic horizon generation module 200. In an embodiment, the map matching and electronic horizon generation module is located in the head unit of the vehicle, and the electronic horizon is broadcast by the head unit via the CAN bus for being used by other electronic control units (ECU) of the vehicle. Accordingly, the positioning module receives the electronic horizon data directly from the CAN bus. In accordance with a preferred embodiment, the electronic horizon is an ADAS (Advanced Driver Assistance Systems) electronic horizon, wherein the road network geometry ahead of the vehicle is coded in the standard ADASIS format. ADASIS (Advanced Driver Assistance Systems Interface Specification) is a standard protocol defined by the European Advanced Driver Assistance Systems Interface Specification forum. Alternatively, proprietary standards for horizon data also exist.

As further shown in the drawing of Fig. 1, fusion generator 110 generates at least fused position information, but preferably information regarding a fused position, speed and heading (150) which is forwarded to the map matching and electronic horizon generation module 200. Said module performs the matching against the full digitized map data available at a database with which module 200 communicates, and provides at least a map matched position, but preferably heading and speed information (160) as well in response to the fused data 150 received from the positioning module 100. Based on the map matching, module 200 further provides an updated electronic horizon, which is used as a basis for data fusion in the next step of an iterative positioning procedure.

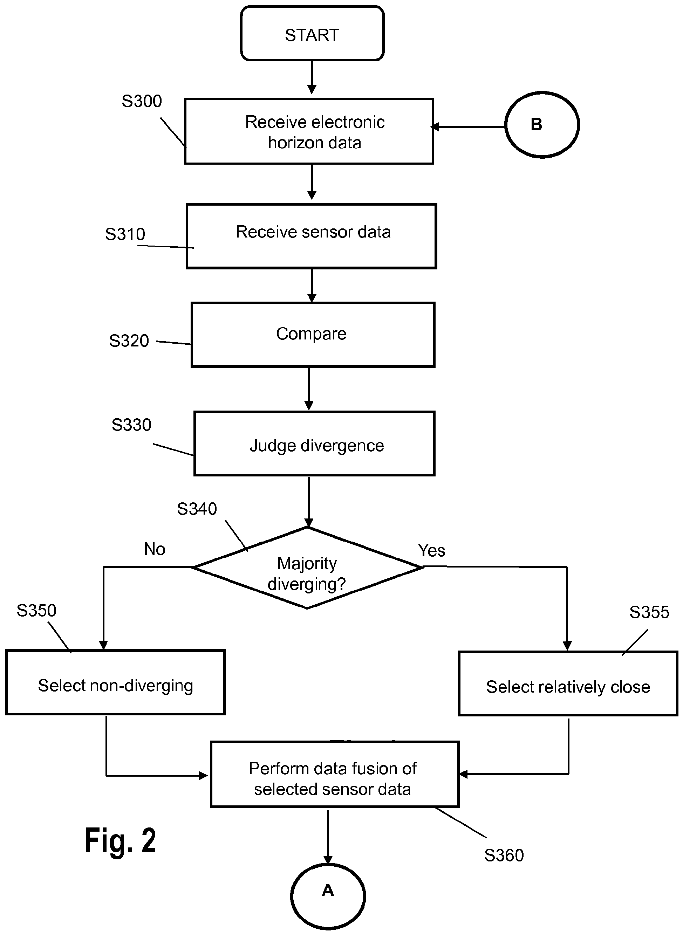

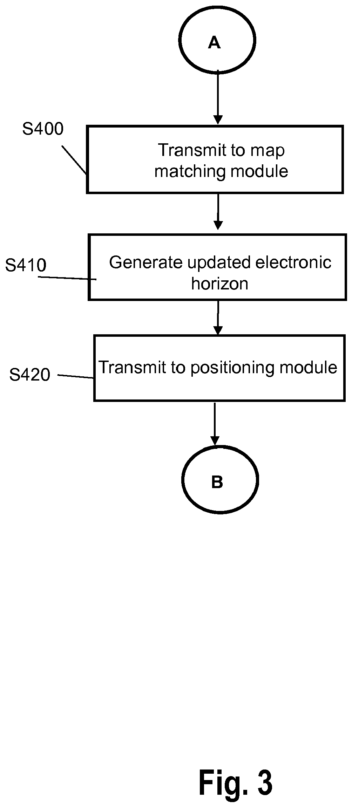

In the following, the overall processing of an exemplary method according to an embodiment of the present invention is described with reference to Figs. 2 and 3.

In step S300, electronic horizon data are received by the positioning module from the map matching and electronic horizon generating module, which may be located in the head unit of the vehicle, but may, in principle, according to embodiments, also be located on a cloud server so that the electronic horizon data is transmitted wirelessly from the Internet. In the following step S310, the positioning module receives sensor data from a plurality of sensors and generates respective sensor data paths by calculation.

In subsequent step S320, the positioning module compares each of the generated sensor data paths against the possible paths indicated by the electronic horizon data. The following step S330 judges whether each of the sensor paths follows a path indicated by the electronic horizon data. If the majority of sensor paths diverges from the road network paths indicated by the electronic horizon (S340: Yes) it is considered that the information about the road network paths is unreliable. In the following steps for generating the map matched position, and, in particular, in the data fusion, therefore only a relatively small weight (as compared to the sensor data) is given to the map-based data, or the latter are completely ignored. Therefore, in step S355, those sensor data paths are selected which remain close to each other along the whole extension of the respective paths. In other words, sensor data paths diverging from the rest of the sensor data paths (for instance: the majority of the sensor data paths) are ignored.

If, on the other hand, the majority of sensor data paths does not diverge from the road network paths of the electronic horizon (i.e. matches one of the possible paths ahead of the vehicle indicated by the electronic horizon, within a predetermined degree of tolerance; S340: No), processing proceeds to step S350, wherein sensor data paths are selected, which remain close to the path network of the electronic horizon (match a path within the predetermined tolerance). In that case, any remaining, non-matching sensor data paths are ignored. It is further noted that not necessarily all sensor data paths matching the electronic horizon are selected in step S350. If, for instance, in view of environmental data included in the electronic horizon data, some path is unlikely to be correct although it remains close to a possible path of the electronic horizon, it may also be ignored.

Hence, both steps S350 and S355 select those sensor data that have been judged to be reliable.

In subsequent step S360, a data fusion of the sensor data obtained from those sensors, on which the sensor data paths selected in either step S350 or step S355 are based, is performed. Preferably, the sensor fusion further also includes the electronic horizon information. The weight which is given to the electronic horizon information as compared to the sensor information may vary in accordance with the circumstances. It is clear that in case of a likely map data error (S340: Yes -> S355) no weight or only a relatively small weight should be given to the electronic horizon data.

The result of the data fusion performed in step S360 is the desired positioning data (preferably: position, heading and speed data) to be forwarded to the navigation device (map matching and electronic horizon generating module).

In a preferred embodiment, the positioning module cooperates with the map matching and electronic horizon generating module for performing the steps illustrated in Fig. 3.

In step S400, the positioning data output by step S360 of Fig. 2 are transmitted to the map matching and electronic horizon generating module. In said module, the positioning data are matched against the full digital map data, and an updated electronic horizon is generated (S410). The map matched positioning data and said updated electronic horizon are retransmitted to the positioning module in step S420, and the updated electronic horizon is input in the procedure of Fig. 2 in step S300 in the next iteration.

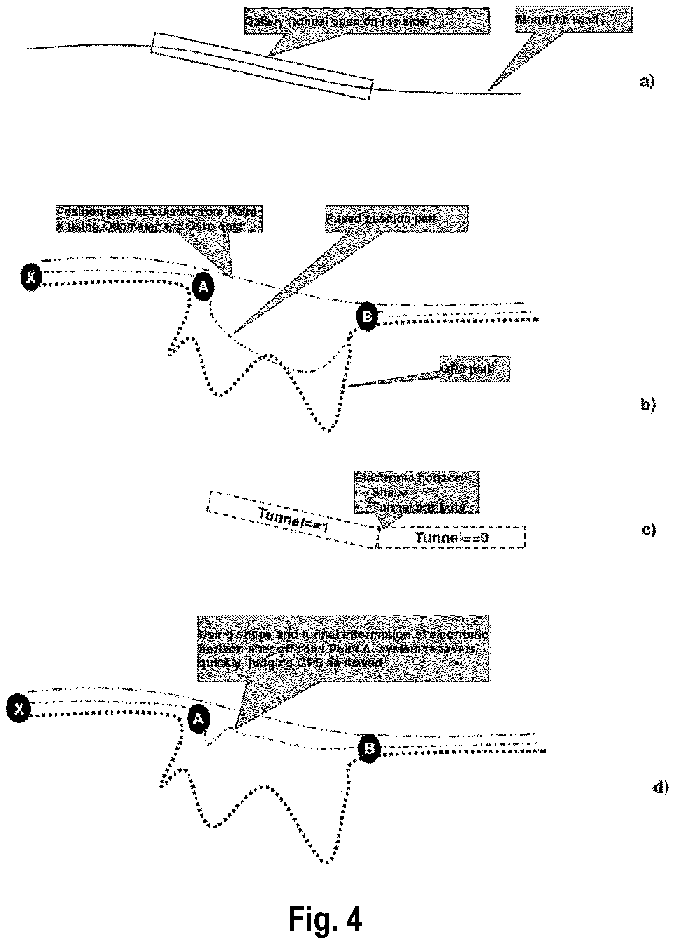

In the following, a particular operating example of the present invention is described with reference to Fig. 4.

It has to be noted that because the electronic horizon is calculated based on the map matching of the current position output by the positioning module, the approach of the invention means some increased feedback processing (besides the simple map matched position processed by a conventional positioning module).

Fig. 4a) shows an exemplary situation of a road section on which a vehicle may be driven. More specifically, a section of a mountain road is illustrated with a so-called "gallery" (i.e. a tunnel which is open on one side) therein. Because in such a half-open tunnel GPS signals can only be received from one side, such locations are prone to GPS position errors.

Fig. 4b) shows an error occurring in a conventional positioning system which does not properly take into account the reliability of different sensor data in a situation as illustrated in Fig. 4a). The figure shows a position path calculated using odometer and gyro data (dash-dot-dot), a GPS path (dotted) and a fused position path that has been generated on the basis of both sensor data paths by a conventional system (dash-dot), alongside the road shown in Fig. 4a). Point X is a reliable vehicle position such as a current position. As can be seen from the drawing, after point A (approximately corresponding to the tunnel entrance) the GPS position diverges from the road. Because of the lack of confidence in the map matching position, this causes off-road of the fused position at point A, only recovering at the end of the gallery at point B. The position path calculated from odometer and gyro data starting from X remains close to the road, but without information on the road network after the off-road at point A the positioning module cannot judge the two sensor position paths against each other.

Fig. 4c) shows the environment information provided on the road ahead by the electronic horizon in accordance with the present invention, ahead of point A. The information includes the rough shape of the road, as well as information on the tunnel. More specifically, "Tunnel = = 1" means the presence of a tunnel in a particular road section, while "Tunnel = = 0" means no presence of a tunnel.

Fig. 4d) shows the effect of judging the sensor data paths provided by GPS against the sensor data path provided from odometer and gyro data using the environmental information of the electronic horizon illustrated in Fig. 4c). Specifically, the GPS data path diverges continuously from the road after point A (while in the present situation, the electronic horizon does not indicate any alternative path as such as diverging or intersecting roads), but the odometer/gyro path stays close to the road. Moreover, the location is marked as a tunnel, and hence GPS problems are rather likely. In conclusion, the positioning module according to the present invention ignores the GPS data for fusion. The fused path therefore remains on-road.

In summary, the present invention relates to a positioning method for a vehicle navigation system, which is based on a data fusion of data obtained from a plurality of different sensors. The method takes into account the reliability of the sensor data obtained from each of the sensors. For this purpose, the method further takes into account electronic horizon data.

Reliability of the different sensor data paths is judged by comparing each of the sensor data paths with the information included in the electronic horizon data. As a result, only those sensor data paths which have been judged as being reliable are selected for the data fusion. Further, the invention also provides the possibility of judging the reliability of the electronic horizon map data, based on the comparison with the sensor data paths.

## Claims

1. A method, performed by a processor (100) of a vehicle, of generating current position data of the vehicle, the method comprising the steps of:
receiving (S300) electronic horizon data (140) indicating possible paths of movement of said vehicle on a road network;
receiving (S310) sensor data (130a, 130b, 130c) obtained by a plurality of sensors (300a, 300b), and using the sensor data (130a, 130b, 130c) obtained by one of the sensors (300a, 300b) to generate a sensor data path (120a, 120b) which is a position path of the vehicle by calculation from the respective sensor data; and
generating a fused position (150) of said vehicle as said current position, based on the received sensor data (130a, 130b, 130c) and the received electronic horizon data (140);
**characterized in that**
said step of generating a fused position includes the steps of
comparing (S320) each of the sensor data paths (120a, 120b) with the electronic horizon data (140);
judging (S330), for each of the sensor data paths (120a, 120b), whether the respective path and the sensor data indicating the path are reliable, based on the result of the comparing step (S320);
selecting (S350) the sensor data paths that are judged to be reliable and ignoring the sensor data paths that are not judged to be reliable; and
performing (S360) a data fusion based on the sensor data indicating the selected sensor data paths.

2. A method according to claim 1, wherein said data fusion is performed (S360) further based on the electronic horizon data (140).

3. A method according to claim 1 or 2, wherein
said comparing step (S320) compares each of the sensor data paths (120a, 120b) with the possible paths indicated by the electronic horizon data (140);
said judging step (S330) judges, for each of the sensor data paths (120a, 120b), whether the respective path diverges from a possible path indicated by the electronic horizon data (140); and
said selecting step (S350) selects sensor data paths not diverging from a possible path indicated by the electronic horizon data (140) and ignores the sensor data paths diverging from the possible paths indicated by the electronic horizon data (140), if (S340: No) there is no majority of sensor data paths diverging from all possible paths indicated by the electronic horizon data (140).

4. A method according to any of claims 1 to 3, wherein said step of generating a fused position (150) ignores the electronic horizon data (140) and selects sensor data paths that are relatively close to each other, if (S340: Yes) there is a majority of sensor data paths diverging from all possible paths indicated by the electronic horizon data (140).

5. A method according to any of claims 1 to 4, wherein said electronic horizon data (140) further include environment attribute information indicating environment attributes of the possible paths of movement, and said comparing step (S320) comprises the step of analysing the sensor data (130a, 130b, 130c) on the basis of the environment attribute information and said judging step (S320) judges whether particular sensor data are reliable on the basis of the analysis.

6. A method according to any of claims 1 to 5, wherein said step of generating a fused position further generates fused data (150) about speed and/or movement direction of said vehicle, the method thereby generating current position, speed and/or movement direction data.

7. A method according to any of claims 1 to 6, further comprising the step of transmitting (S400) the generated fused data (150) to a map matching and electronic horizon generation module (200).

8. A method according to claim 7, further comprising the steps of
receiving (S310) updated electronic horizon data (140, 160) from said map matching and electronic horizon generating module (200), in response to said transmitting step (S400), and
repeatedly performing said steps for generating current position data on the basis of the received updated electronic horizon data (140, 160), in order to generate at least updated position data of the vehicle.

9. A positioning module for a vehicle, for generating current position data of the vehicle, said positioning module comprising:
a first receiver for receiving electronic horizon data (140) indicating possible paths of movement of said vehicle on a road network;
a second receiver for receiving sensor data (130a, 130b, 130c) obtained by a plurality of sensors (300a, 300b), for using the sensor data (130a, 130b, 130c) obtained by one of the sensors (300a, 300b) to generate a sensor data path (120a, 120b) which is a position path of the vehicle by calculation from the respective sensor data; and
a fused data generator (110) for generating a fused position (150) of said vehicle as said current position, based on the received sensor data (130a, 130b, 130c) and the received electronic horizon data (140);
**characterized in that**
said fused data generator (110) includes
a comparator for comparing each of the sensor data paths (120a, 120b) with the electronic horizon data (140);
a judging means for judging, for each of the sensor data paths (120a, 120b), whether the respective path and the sensor data indicating the path are reliable, based on the result of the comparison;
a selector for selecting the sensor data paths that are judged to be reliable and ignoring the sensor data paths that are not judged to be reliable; and
a fusion performer for performing a data fusion based on the sensor data indicating the selected sensor data paths.

10. A positioning module according to claim 9, wherein said fusion performer performs said data fusion further based on the electronic horizon data (140).

11. A positioning module according to claim 9 or 10, wherein
said comparator compares each of the sensor data paths (120a, 120b) with the possible paths indicated by the electronic horizon data (140);
said judging means judges, for each of the sensor data paths (120a, 120b), whether the respective path diverges from a possible path indicated by the electronic horizon data (140); and
said selector selects sensor data paths not diverging from a possible path indicated by the electronic horizon data (140) and ignores the sensor data paths diverging from the possible paths indicated by the electronic horizon data (140), if (S340: No) there is no majority of sensor data paths diverging from all possible paths indicated by the electronic horizon data (140).

12. A positioning module according to any of claims 9 to 11, wherein said fused data generator (110) ignores the electronic horizon data (140) and selects sensor data paths that are relatively close to each other, if there is a majority of sensor data paths diverging from all possible paths indicated by the electronic horizon data (140).

13. A positioning module according to any of claims 9 to 12, wherein said electronic horizon data further include environment attribute information indicating environment attributes of the possible paths of movement, and said comparator includes an analyser for analysing the sensor data (130a, 130b, 130c) on the basis of the environment attribute information and said judging means judges whether particular sensor data are reliable on the basis of the analysis.

14. A positioning module according to any of claims 9 to 13, wherein said fused data generator (110) is further adapted to generate fused data (150) about speed and/or movement direction of said vehicle, the positioning module thereby being capable of generating current position, speed and/or movement direction data.

15. A vehicle navigation system comprising:
a positioning module (100) according to any of claims 9 to 14, further comprising a transmitter for transmitting the generated fused data (150) to a map matching and electronic horizon generation module (200), and
a map matching and electronic horizon generating module (200) for generating updated electronic horizon data (140, 160) based on the fused data (150) about at least the vehicle position transmitted by said positioning module (100) and digital map data stored in said map matching and electronic horizon generating module (200) and transmitting the updated electronic horizon data (140, 160) to said positioning module (100) for being used as said electronic horizon data to generate at least an updated vehicle position.

## Patentansprüche

1. Verfahren, ausgeführt von einem Prozessor (100) eines Fahrzeugs, des Erzeugens aktueller Positionsdaten des Fahrzeugs, wobei das Verfahren die Schritte umfasst:
Empfangen (S300) elektronischer Horizontdaten (140), die mögliche Bewegungswege des Fahrzeugs auf einem Straßennetz anzeigen;
Empfangen (S310) von Sensordaten (130a, 130b, 130c), erhalten durch eine Mehrzahl von Sensoren (300a, 300b) und Benutzen der durch einen der Sensoren (300a, 300b) erhaltenen Sensordaten (130a, 130b, 130c), um einen Sensordatenweg (120a, 120b), der ein Positionsweg des Fahrzeugs ist, durch Berechnung aus den entsprechenden Sensordaten zu erzeugen; und
Erzeugen einer fusionierten Position (150) des Fahrzeugs als der aktuellen Position, basierend auf den empfangenen Sensordaten (130a, 130b, 130c) und den empfangenen elektronischen Horizontdaten (140);
**dadurch gekennzeichnet, dass**
der Schritt des Erzeugens einer fusionierten Position die Schritte einschließt:
Vergleichen (S320) jedes der Sensordatenwege (120a, 120b) mit den elektronischen Horizontdaten (140);
Beurteilen (S330), für jeden der Sensordatenwege (120a, 120b), ob der jeweilige Weg und die den Weg angebenden Sensordaten zuverlässig sind, basierend auf dem Ergebnis des Vergleichsschritts (S320);
Auswählen (S350) der Sensordatenwege, die als zuverlässig beurteilt werden und Ignorieren der Sensordatenwege, die nicht als zuverlässig beurteilt werden; und
Ausführen (S360) einer Datenfusion, basierend auf den Sensordaten, die die ausgewählten Sensordatenwege angeben.

2. Verfahren nach Anspruch 1, wobei die Datenfusion weiterhin basierend auf den elektronischen Horizontdaten (140) ausgeführt wird (S360).

3. Verfahren nach Anspruch 1 oder 2, wobei
der Vergleichsschritt (S320) jeden der Sensordatenwege (120a, 120b) mit den durch die elektronischen Horizontdaten (140) angezeigten möglichen Wegen vergleicht;
der Beurteilungsschritt (S330) für jeden der Sensordatenwege (120a, 120b) beurteilt, ob der jeweilige Weg von einem durch die elektronischen Horizontdaten (140) angezeigten möglichen Weg abweicht; und
der Auswahlschritt (S350) Sensordatenwege, die nicht von einem durch die elektronischen Horizontdaten (140) angezeigten möglichen Weg abweichen, auswählt und die Sensordatenwege ignoriert, die von den durch die elektronischen Horizontdaten (140) angezeigten möglichen Wegen abweichen, wenn (S340: Nein) es keine Mehrheit von Sensordatenwegen gibt, die von allen durch die elektronischen Horizontdaten (140) angezeigten möglichen Wegen abweichen.

4. Verfahren nach einem der Ansprüche 1 bis 3, wobei der Schritt des Erzeugens einer fusionierten Position (150) die elektronischen Horizontdaten (140) ignoriert und Sensordatenwege auswählt, die relativ nahe beieinander sind, wenn (S340: Ja) es eine Mehrheit von Sensordatenwegen gibt, die von allen durch die elektronischen Horizontdaten (140) angezeigten möglichen Wegen abweichen.

5. Verfahren nach einem der Ansprüche 1 bis 4, wobei die elektronischen Horizontdaten (140) weiterhin Umgebungsattributinformation enthalten, die Umgebungsattribute der möglichen Bewegungswege angibt und
der Vergleichsschritt (S320) den Schritt des Analysierens der Sensordaten (130a, 130b, 130c) auf der Basis der Umgebungsattributinformation umfasst und der Beurteilungsschritt (S320) auf der Basis der Analyse beurteilt, ob bestimmte Sensordaten zuverlässig sind.

6. Verfahren nach einem der Ansprüche 1 bis 5, wobei der Schritt des Erzeugens einer fusionierten Position weiterhin fusionierte Daten (150) über Geschwindigkeit und/oder Bewegungsrichtung des Fahrzeugs erzeugt, wodurch das Verfahren aktuelle Positions-, Geschwindigkeits- und/oder Bewegungsrichtungsdaten erzeugt.

7. Verfahren nach einem der Ansprüche 1 bis 6, weiterhin umfassend den Schritt des Übertragens (S400) der erzeugten fusionierten Daten (150) an ein Modul (200) für den Kartenabgleich und die elektronische Horizonterzeugung.

8. Verfahren nach Anspruch 7, weiterhin umfassend die Schritte:
Empfangen (S310) aktualisierter elektronischer Horizontdaten (140, 160) von dem Modul (200) für den Kartenabgleich und die elektronische Horizonterzeugung, in Erwiderung auf den Übertragungsschritt (S400) und
wiederholtes Ausführen der Schritte zum Erzeugen aktueller Positionsdaten auf der Basis der empfangenen aktualisierten elektronischen Horizontdaten (140, 160), um wenigstens aktualisierte Positionsdaten des Fahrzeugs zu erzeugen.

9. Positionierungsmodul für ein Fahrzeug, zum Erzeugen aktueller Positionsdaten des Fahrzeugs, wobei das Positionierungsmodul umfasst:
einen ersten Empfänger zum Empfangen elektronischer Horizontdaten (140), die mögliche Bewegungswege des Fahrzeugs auf einem Straßennetz anzeigen;
einen zweiten Empfänger zum Empfangen von Sensordaten (130a, 130b, 130c), erhalten durch eine Mehrzahl von Sensoren (300a, 300b), um die durch einen der Sensoren (300a, 300b) erhaltenen Sensordaten (130a, 130b, 130c) zu benutzen, um einen Sensordatenweg (120a, 120b), der ein Positionsweg des Fahrzeugs ist, durch Berechnung aus den entsprechenden Sensordaten zu erzeugen; und
einen Erzeuger (110) für fusionierte Daten zum Erzeugen einer fusionierten Position (150) des Fahrzeugs als der aktuellen Position, basierend auf den empfangenen Sensordaten (130a, 130b, 130c) und den empfangenen elektronischen Horizontdaten (140);
**dadurch gekennzeichnet, dass**
der Erzeuger (110) für fusionierte Daten enthält:
eine Vergleichseinrichtung zum Vergleichen jedes der Sensordatenwege (120a, 120b) mit den elektronischen Horizontdaten (140);
eine Beurteilungseinrichtung zum Beurteilen, für jeden der Sensordatenwege (120a, 120b), ob der jeweilige Weg und die den Weg angebenden Sensordaten zuverlässig sind, basierend auf dem Ergebnis des Vergleichs;
eine Auswahleinrichtung zum Auswählen der Sensordatenwege, die als zuverlässig beurteilt werden und Ignorieren der Sensordatenwege, die nicht als zuverlässig beurteilt werden; und
eine Fusionsausführungseinrichtung zum Ausführen einer Datenfusion, basierend auf den Sensordaten, die die ausgewählten Sensordatenwege angeben.

10. Positionierungsmodul nach Anspruch 9, wobei die Fusionsausführungseinrichtung die Datenfusion weiterhin basierend auf den elektronischen Horizontdaten (140) ausführt.

11. Positionierungsmodul nach Anspruch 9 oder 10, wobei
die Vergleichseinrichtung jeden der Sensordatenwege (120a, 120b) mit den durch die elektronischen Horizontdaten (140) angezeigten möglichen Wegen vergleicht;
die Beurteilungseinrichtung für jeden der Sensordatenwege (120a, 120b) beurteilt, ob der jeweilige Weg von einem durch die elektronischen Horizontdaten (140) angezeigten möglichen Weg abweicht; und
die Auswahleinrichtung Sensordatenwege, die nicht von einem durch die elektronischen Horizontdaten (140) angezeigten möglichen Weg abweichen, auswählt und die Sensordatenwege ignoriert, die von den durch die elektronischen Horizontdaten (140) angezeigten möglichen Wegen abweichen, wenn (S340: Nein) es keine Mehrheit von Sensordatenwegen gibt, die von allen durch die elektronischen Horizontdaten (140) angezeigten möglichen Wegen abweichen.

12. Positionierungsmodul nach einem der Ansprüche 9 bis 11, wobei der Erzeuger (110) für fusionierte Daten die elektronischen Horizontdaten (140) ignoriert und Sensordatenwege auswählt, die relativ nahe beieinander sind, wenn es eine Mehrheit von Sensordatenwegen gibt, die von allen durch die elektronischen Horizontdaten (140) angezeigten möglichen Wegen abweichen.

13. Positionierungsmodul nach einem der Ansprüche 9 bis 12, wobei die elektronischen Horizontdaten weiterhin Umgebungsattributinformation enthalten, die Umgebungsattribute der möglichen Bewegungswege angibt und
die Vergleichseinrichtung eine Analysiereinrichtung zum Analysieren der Sensordaten (130a, 130b, 130c) auf der Basis der Umgebungsattributinformation enthält und die Beurteilungseinrichtung auf der Basis der Analyse beurteilt, ob bestimmte Sensordaten zuverlässig sind.

14. Positionierungsmodul nach einem der Ansprüche 9 bis 13, wobei der Erzeuger (110) für fusionierte Daten weiterhin angepasst ist, fusionierte Daten (150) über Geschwindigkeit und/oder Bewegungsrichtung des Fahrzeugs zu erzeugen, wodurch das Positionierungsmodul in der Lage ist, aktuelle Positions-, Geschwindigkeits- und/oder Positionierungsdaten zu erzeugen.

15. Fahrzeugnavigationssystem, umfassend:
ein Positionierungsmodul (100) nach einem der Ansprüche 9 bis 14, weiterhin umfassend einen Übertrager zum Übertragen der erzeugten fusionierten Daten (150) an ein Modul (200) für den Kartenabgleich und die elektronische Horizonterzeugung und
ein Modul (200) für den Kartenabgleich und die elektronische Horizonterzeugung zum Erzeugen aktualisierter elektronischer Horizontdaten (140, 160), basierend auf den fusionierten Daten (150) über wenigstens die von dem Positionierungsmodul (100) übertragene Fahrzeugposition und in dem Modul (200) für den Kartenabgleich und die elektronische Horizonterzeugung gespeicherten digitalen Kartendaten und Übertragen der aktualisierten elektronischen Horizontdaten (140, 160) an das Positionierungsmodul (100), um als die elektronischen Horizontdaten zum Erzeugen wenigstens einer aktualisierten Fahrzeugposition verwendet zu werden.

## Revendications

1. Procédé, exécuté par un processeur (100) d'un véhicule, pour générer des données de position actuelle du véhicule, le procédé comprenant les étapes consistant à:
recevoir (S300) des données d'horizon électronique (140) indiquant les chemins possibles de déplacement dudit véhicule sur un réseau routier;
recevoir (S310) des données de capteur (130a, 130b, 130c) obtenues par une pluralité de capteurs (300a, 300b), et en utilisant
les données de capteur (130a, 130b, 130c) obtenues par l'un des capteurs (300a, 300b) pour générer un chemin de données de capteur (120a, 120b) qui est un chemin de position du véhicule par calcul à partir des données de capteur respectives; et
générer une position de fusion (150) dudit véhicule en tant que ladite position actuelle, sur la base des données de capteur reçues (130a, 130b, 130c) et des données d'horizon électronique reçues (140);
**caractérisé en ce que**
ladite étape de génération d'une position de fusion comprend les étapes consistant à
comparer (S320) chacun des chemins de données de capteur (120a, 120b) avec les données d'horizon électronique (140);
déterminer (S330), pour chacun des chemins de données de capteur (120a, 120b), si le chemin respectif et les données de capteur indiquant le chemin sont fiables, sur la base du résultat de l'étape de comparaison (S320);
sélectionner (S350) les chemins de données de capteur qui sont jugés fiables et ignorer les chemins de données de capteur qui ne sont pas jugés fiables; et
effectuer (S360) une fusion de données sur la base des données de capteur indiquant les chemins de données de capteur sélectionnés.

2. Procédé selon la revendication 1, dans lequel ladite fusion de données est effectuée (S360), en outre sur la base des données d'horizon électronique (140).

3. Procédé selon les revendications 1 ou 2, dans lequel
ladite étape de comparaison (S320) compare chacun des chemins de données de capteur (120a, 120b) aux chemins possibles indiqués par les données d'horizon électronique (140);
ladite étape de jugement (S330) détermine, pour chacun des chemins de données de capteur (120a, 120b), si le chemin respectif diverge d'un chemin possible indiqué par les données d'horizon électronique (140); et
ladite étape de sélection (S350) sélectionne des chemins de données de capteur ne divergeant pas d'un chemin possible indiqué par les données d'horizon électroniques (140) et ignore les chemins de données de capteur divergeant des chemins possibles indiqués par les données d'horizon électroniques (140), si (S340: Non) il n'y a pas de majorité de chemins de données de capteurs divergeant de tous les chemins possibles indiqués par les données d'horizon électronique (140).

4. Procédé selon l'une quelconque des revendications 1 à 3, dans lequel ladite étape consistant à générer une position de fusion (150) ignore les données d'horizon électronique (140) et sélectionne les chemins de données du capteur qui sont relativement proches les uns des autres, si (S340: Oui) il y a une majorité de données de capteur des chemins divergeant de tous les chemins possibles indiqués par les données d'horizon électronique (140).

5. Procédé selon l'une quelconque des revendications 1 à 4, dans lequel lesdites données d'horizon électronique (140) incluent en outre des informations d'attribut d'environnement indiquant les attributs d'environnement des chemins possibles de déplacement et
ladite étape de comparaison (S320) comprend l'étape consistant à analyser les données de capteur (130a, 130b, 130c) sur la base des informations d'attribut d'environnement et ladite étape d'évaluation (S320) détermine si des données de capteur particulières sont fiables sur la base de l'analyse.

6. Procédé selon l'une quelconque des revendications 1 à 5, dans lequel ladite étape consistant à générer une position de fusion génère en outre des données de fusion (150) concernant la vitesse et/ou la direction du déplacement dudit véhicule, le procédé générant ainsi les données actuelles de position, de vitesse et/ou de la direction du déplacement.

7. Procédé selon l'une quelconque des revendications 1 à 6, comprenant en outre l'étape consistant à transmettre (S400) les données de fusion générées (150) avec une correspondance de carte et un module de génération d'horizon électronique (200).

8. Procédé selon la revendication 7, comprenant en outre les étapes suivantes:
recevoir (S310) des données d'horizon électronique mises à jour (140, 160) depuis ledit module de correspondance de carte et de génération d'horizon électronique (200), en réponse à ladite étape de transmission (S400), et
exécuter de manière répétée lesdites étapes pour générer des données de position actuelles sur la base des données d'horizon électronique mises à jour et reçues (140, 160), afin de générer au moins des données de position mises à jour du véhicule.

9. Module de positionnement pour un véhicule, pour générer des données de position actuelles du véhicule,
ledit module de positionnement comprenant:
un premier récepteur permettant de recevoir des données d'horizon électronique (140) indiquant les chemins possibles de déplacement dudit véhicule sur un réseau routier;
un second récepteur permettant de recevoir des données de capteur (130a, 130b, 130c) obtenues par une pluralité de capteurs (300a, 300b), pour utiliser
les données de capteur (130a, 130b, 130c) obtenues par l'un des capteurs (300a, 300b) pour générer un chemin de données de capteur (120a, 120b) qui est un chemin de position du véhicule par calcul à partir des données de capteur respectives; et
un générateur de données de fusion (110) permettant de générer une position de fusion (150) dudit véhicule en tant que ladite position actuelle, sur la base des données de capteur reçues (130a, 130b, 130c) et des données d'horizon électronique reçues (140);
**caractérisé en ce que**
ledit générateur de données de fusion (110) comprend un comparateur permettant de comparer chacun des chemins de données de capteur (120a, 120b) avec les données d'horizon électronique (140);
un moyen permettant de déterminer, pour chacun des chemins de données de capteur (120a, 120b), si le chemin respectif et les données de capteur indiquant le chemin sont fiables, sur la base du résultat de l'étape de comparaison;
un sélecteur permettant de sélectionner les chemins de données de capteur qui sont jugés fiables et ignorer les chemins de données de capteur qui ne sont pas jugés fiables; et
un dispositif de fusion permettant de réaliser une fusion de données sur la base des données de capteur indiquant les chemins de données de capteur sélectionnés.

10. Module de positionnement selon la revendication 1, dans lequel ledit dispositif de fusion réalise ladite fusion de données en outre sur la base des données d'horizon électronique (140).

11. Module de positionnement selon les revendications 9 ou 10, dans lequel ledit comparateur compare chacun des chemins de données de capteur (120a, 120b) aux chemins possibles indiqués par les données d'horizon électronique (140);
ledit moyen de jugement détermine, pour chacun des chemins de données de capteur (120a, 120b), si le chemin respectif diverge d'un chemin possible indiqué par les données d'horizon électronique (140); et
ledit sélecteur va sélectionner des chemins de données de capteur ne divergeant pas d'un chemin possible indiqué par les données d'horizon électronique (140) et ignore les chemins de données de capteur divergeant des chemins possibles indiqués par les données d'horizon électronique (140), si (S340: Non) il n'y a pas de majorité de chemins de données de capteurs divergeant de tous les chemins possibles indiqués par les données d'horizon électronique (140).

12. Module de positionnement selon l'une quelconque des revendications 9 à 11, dans lequel ledit générateur de données de fusion (110) ignore les données d'horizon électronique (140) et sélectionne les chemins de données du capteur relativement proches les uns des autres, s'il existe une majorité de chemins de données de capteurs divergeant de tous les chemins possibles indiqués par les données d'horizon électronique (140).

13. Module de positionnement selon l'une quelconque des revendications 9 à 12, dans lequel lesdites données d'horizon électronique incluent en outre des informations d'attribut d'environnement indiquant les attributs d'environnement des chemins de déplacement possibles et
ledit comparateur inclut un analyseur permettant d'analyse des données de capteur (130a, 130b, 130c) sur la base des informations d'attribut d'environnement et ladite étape d'évaluation détermine si des données de capteur particulières sont fiables sur la base de l'analyse.

14. Module de positionnement selon l'une quelconque des revendications 9 à 13, dans lequel le générateur de données fusion (110) est en outre adapté pour générer des données de fusion (150) concernant la vitesse et/ou la direction de déplacement dudit véhicule, le module de positionnement étant ainsi capable de générer des données actuelles de position, de vitesse et/ ou de direction du déplacement.

15. Système de navigation de véhicule comprenant:
un module de positionnement (100) selon l'une quelconque des revendications 9 à 14, comprenant en outre un émetteur pour transmettre les données de fusion générées (150) à un module d'appariement de carte et de génération d'horizon électronique (200), et
un module de correspondance de carte et de génération d'horizon électronique (200) permettant de générer des données d'horizon électronique mises à jour (140, 160) sur la base des données de fusion (150) relatives à au moins la position du véhicule transmise par ledit module de positionnement (100) et des données de carte numériques stockées dans ledit module d'adaptation de carte et de génération électronique d'horizon (200) et pour transmettre les données d'horizon électronique mises à jour (140, 160) audit module de positionnement (100) utilisés comme lesdites données d'horizon électronique pour générer au moins une position de véhicule mise à jour.
